(19) Europäisches Patentamt
European Patent Office
Office européen des brevets

(11) **EP 1 942 404 A2**

(12) **EUROPEAN PATENT APPLICATION**

(43) Date of publication:
**09.07.2008 Bulletin 2008/28**

(51) Int Cl.:
**G06F 3/048** *(2006.01)*

(21) Application number: **08100097.8**

(22) Date of filing: **04.01.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **05.01.2007 KR 20070001599**

(71) Applicant: **Samsung Electronics Co., Ltd.**
**Suwon-si**
**Gyeonggi-do 443-742 (KR)**

(72) Inventors:
• **Choi, Eun-seok**
  **449-712, Gyeonggi-do (KR)**
• **Bang, Won-chul**
  **446-712, Gyeonggi-do (KR)**
• **Cho, Sung-jung**
  **446-712, Gyeonggi-do (KR)**

(74) Representative: **Van Someren, Petronella F. H. M.**
**Arnold & Siedsma,**
**Sweelinckplein 1**
**2517 GK  The Hague (NL)**

(54) **Apparatus and method for providing feedback of item transition probability in tilt-based list search**

(57)     Disclosed is an apparatus and method of providing feedback of a location of a cursor in a tilt-based list search. An apparatus for providing feedback of a location of a cursor in a tilt-based list search according to an aspect of the present invention includes a cursor location control module calculating and changing the location of the cursor according to a tilt angle, a probability calculating module calculating probabilities of the cursor being located at items of each list according to the calculated location of the cursor, and a display module changing an attribute of the list according to the calculated probabilities and displaying the list.

## FIG. 1

EP 1 942 404 A2

**Description**

CROSS REFERENCE TO RELATED APPLICATION

This application claims priority from Korean Patent Application No. 10-2007-0001599 filed on January 5, 2007, in the Korean Intellectual Property Office, the disclosure of which is incorporated herein by reference in its entirety.

BACKGROUND OF THE INVENTION

1. Field of the Invention

The present invention relates to an apparatus and method of providing feedback of a location of a cursor in a tilt-based list search. More particularly, the present invention relates to an apparatus and method of providing feedback of a location of a cursor in a tilt-based list search that are capable of causing the movement of the cursor for selecting a corresponding item to be fed back in real time and preventing the possibility of overshooting an item where the cursor is to be located, when searching a list composed of one or more items, such as menus or photos, by a tilt in a portable apparatus.

2. Description of the Related Art

Due to the integration of digital devices, performances of portable digital apparatuses, such as a PDA, a cellular phone, an MP3, and a digital camera, are continuously improving. As sizes of the portable digital apparatuses are decreasing, various restrictions are increasing in mounting various functional buttons. Therefore, an input method of a portable digital apparatus has been required such that variety of information can be input without depending on functional buttons provided in a limited space thereof.

In order to solve this problem, Korean Laid-Open Publication No. 2004-092217 discloses "an image display method in a mobile communication terminal" in which a tilt direction and a tilt angle are detected according to a state or posture of a terminal in a tilt-based input method in which buttons do not need to be provided, and dynamic images are allowed to move according to the detected tilt direction and tilt angle.

The tilt means that a certain object is tilted from a reference posture like a horizontal state. Through a tilt operation, a plurality of images are moved such that a user can view the images, or the cursor is moved in a list composed of one or more items, such as menus, such that each item in the list can be selected.

When the user views the images or selects the items in the list through the above-described tilt operation, it is difficult for the user to control a tilt angle in advance. As a result, an image displayed on a screen moves to an undesired image, or the cursor selecting the item is not accurately located at a target item but passes the target item to move to an undesired item.

This requires that the user accurately performs the tilt operation. Therefore, it becomes difficult for the user to accurately perform a tilt-based operation constantly when operating a tilt-based portable digital apparatus.

SUMMARY OF THE INVENTION

An object of the present invention is to provide an apparatus and method of providing feedback of a location of a cursor in a tilt-based list search that are capable of calculating the probability of a cursor being located at each item in a list by a tilt operation of a user and causing the movement of the cursor to be fed back in real time according to the calculated probability.

Another object of the present invention is to provide an apparatus and method of providing feedback of a location of a cursor in a tilt-based list search that are capable of causing the movement of a cursor to be fed back in real time such that a user accurately locates the cursor at a target item.

Objects of the present invention are not limited to those mentioned above, and other objects of the present invention will be apparently understood by those skilled in the art through the following description.

According to one aspect of the present invention, there is provided an apparatus for providing feedback of a location of a cursor in a tilt-based list search, the apparatus including a cursor location control module calculating and changing the location of the cursor according to a tilt angle, a probability calculating module calculating probabilities of the cursor being located at items of each list according to the calculated location of the cursor, and a display module changing an attribute of the list according to the calculated probability and displaying the list.

According to another aspect of the present invention, there is provided a method of providing feedback of a location of a cursor in a tilt-based list search, the method including calculating and changing the location of the cursor according to a tilt angle, calculating probabilities of the cursor being located at items of each list according to the calculated location of the cursor, and changing an attribute of the list according to the calculated probability and displaying the list.

For reference, in an embodiment of the present invention, the "list" includes one or more images and photographs that can be viewed through a portable apparatus, and one or more icons, such as menus for using the portable apparatus.

## BRIEF DESCRIPTION OF THE DRAWINGS

The above and other features and advantages of the present invention will become more apparent by describing in detail preferred embodiments thereof with reference to the attached drawings in which:

FIG. 1 is a diagram illustrating tilt-based list selection according to the related art;
FIGS. 2A to 2D are a diagram illustrating location movement of a cursor according to a tilt angle;
FIG. 3 is a diagram illustrating a structure of an apparatus for providing feedback of a location of a cursor in a tilt-based list search according to an embodiment of the present invention;
FIG. 4 is a diagram illustrating a linear probability transform method using a probability calculating module according to an embodiment of the present invention;
FIGS. 5A to 5C are a diagram visually illustrating a probability of a cursor being located for each item according to an embodiment of the present invention; and
FIG. 6 is a flowchart illustrating a method of providing feedback of a location of a cursor in a tilt-based list search according to an embodiment of the present invention.

## DESCRIPTION OF THE PREFERRED EMBODIMENTS

Advantages and features of the present invention and methods of accomplishing the same may be understood more readily by reference to the following detailed description of preferred embodiments and the accompanying drawings. The present invention may, however, be embodied in many different forms and should not be construed as being limited to the embodiments set forth herein. Rather, these embodiments are provided so that this disclosure will be thorough and complete and will fully convey the concept of the present invention to those skilled in the art, and the present invention will only be defined by the appended claims. Like identification codes refer to like elements throughout the specification.

The present invention will be described hereinafter with reference to block diagrams or flowchart illustrations of an apparatus and method of providing feedback of a location of a cursor in a tilt-based list search according to exemplary embodiments thereof.

It will be understood that each block of the flowchart illustrations, and combinations of blocks in the flowchart illustrations can be implemented by computer program instructions.

These computer program instructions can be provided to a processor of a general purpose computer, special purpose computer, or other programmable data processing apparatus to produce a machine, such that the instructions, which execute via the processor of the computer or other programmable data processing apparatus, create means for implementing the functions specified in the flowchart block or blocks.

These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks.

The computer program instructions may also be loaded onto a computer or other programmable data processing apparatus to cause a series of operational steps to be performed on the computer or other programmable apparatus to produce a computer implemented process such that the instructions that are executed on the computer or other programmable apparatus provide steps for implementing the functions specified in the flowchart block or blocks.

Also, each block of the block diagrams may represent a module, segment, or portion of code, which comprises one or more executable instructions for implementing the specified logical function(s).

It should also be noted that in some alternative implementations, the functions noted in the blocks may occur out of order.

For example, two blocks shown in succession may in fact be substantially executed concurrently or the blocks may sometimes be executed in reverse order depending upon the functionality involved.

The present invention will now be described more fully with reference to the accompanying drawings, in which preferred embodiments of the present invention are shown.

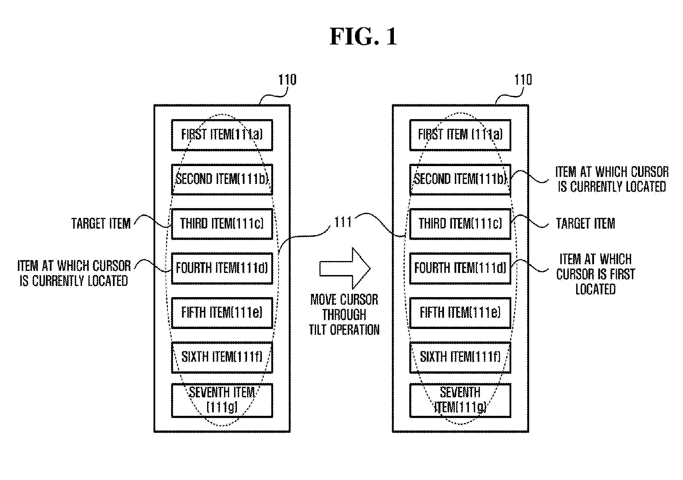

FIG. 1 is a diagram illustrating tilt-based list selection according to the related art.

It is assumed that a list 111, which is composed of one or more items 111a to 111g, is displayed on a tilt-based portable apparatus screen 110, and a user moves a cursor located at a fourth item 111d to a third item 111c through a tilt operation.

FIG. 1 illustrates a case where although a user wants to move the cursor from a fourth item 111d to a third item 111c, the cursor passes the third item 111c and instead moves to the second item 111b.

This case is generated because the user tilts the portable apparatus at a tilt angle larger than a tilt angle needed when the user moves the cursor to a target item, in the case where the user tilts the portable apparatus so as to move the cursor and select the target item. This is referred to as overshoot.

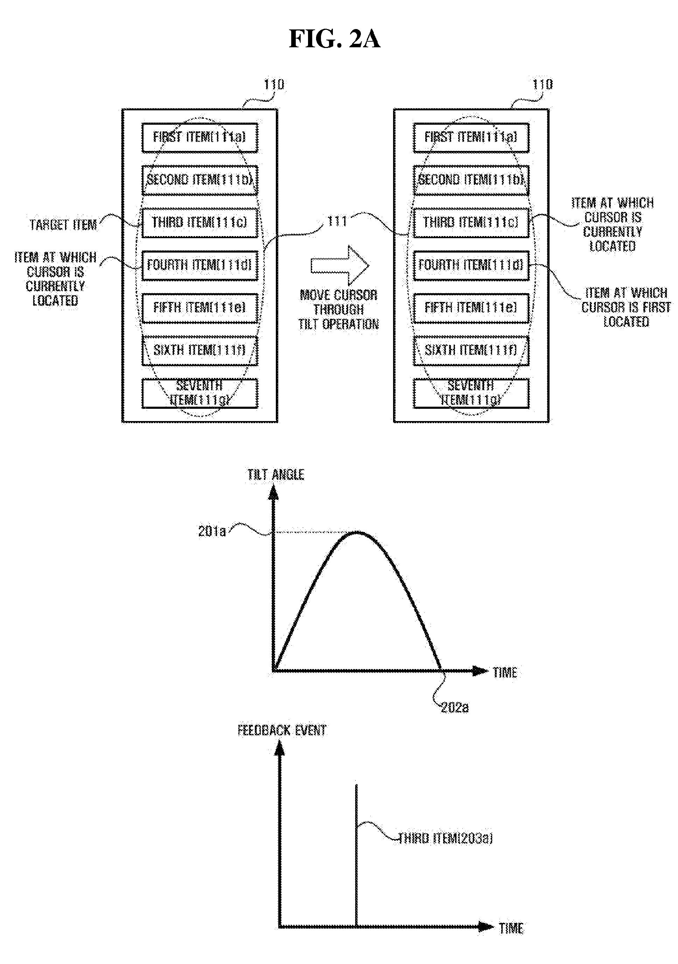

FIGS. 2A to 2D are diagrams illustrating location movement of a cursor according to a tilt angle, and illustrate a relationship between the tilt angle and the time and a feedback event according to the time.

The details of FIGS. 2A to 2D will be described with reference to FIG. 1.

Here, it is assumed that a list 111, which is composed of one or more items 111a to 111g, is displayed on a tilt-based portable apparatus screen 110, and a user moves a cursor located at a fourth item 111d to a third item 111c through a tilt operation of a portable apparatus.

FIG. 2A shows a case where a tilt 201a having a predetermined magnitude is given for a predetermined amount of time 202a, a cursor is accurately located at a third item 111c as a target item, and a feedback event 203a for the third item 111c as the target item is generated.

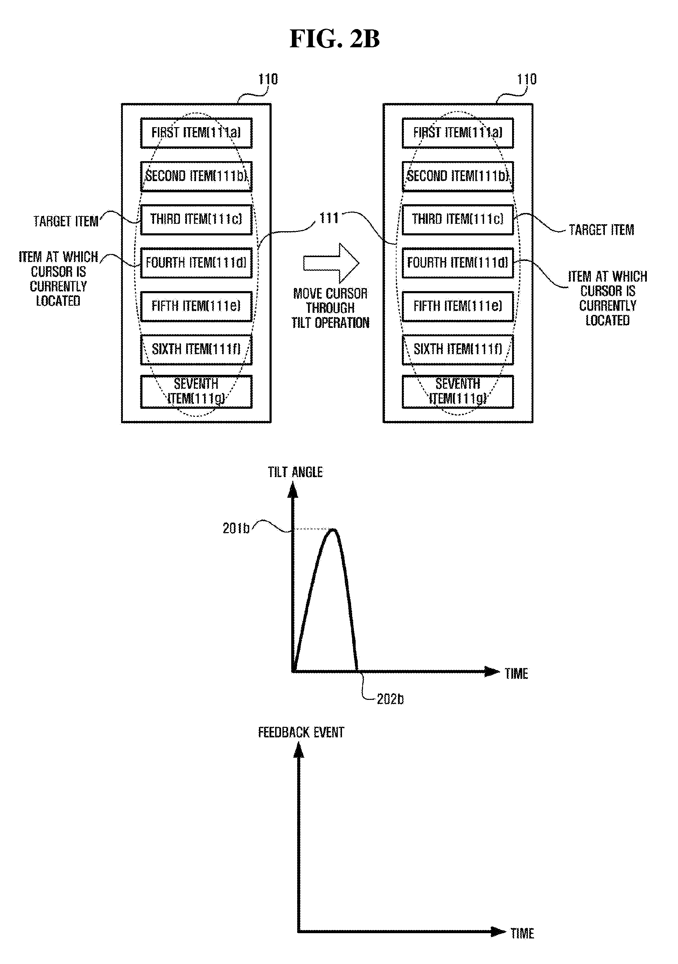

FIG. 2B shows a case where since a tilt 201b having a predetermined magnitude is given but a tilt time 202b is extremely short, the cursor does not move at a location of a fourth item 111d to be an original location, and thus a feedback event is not generated.

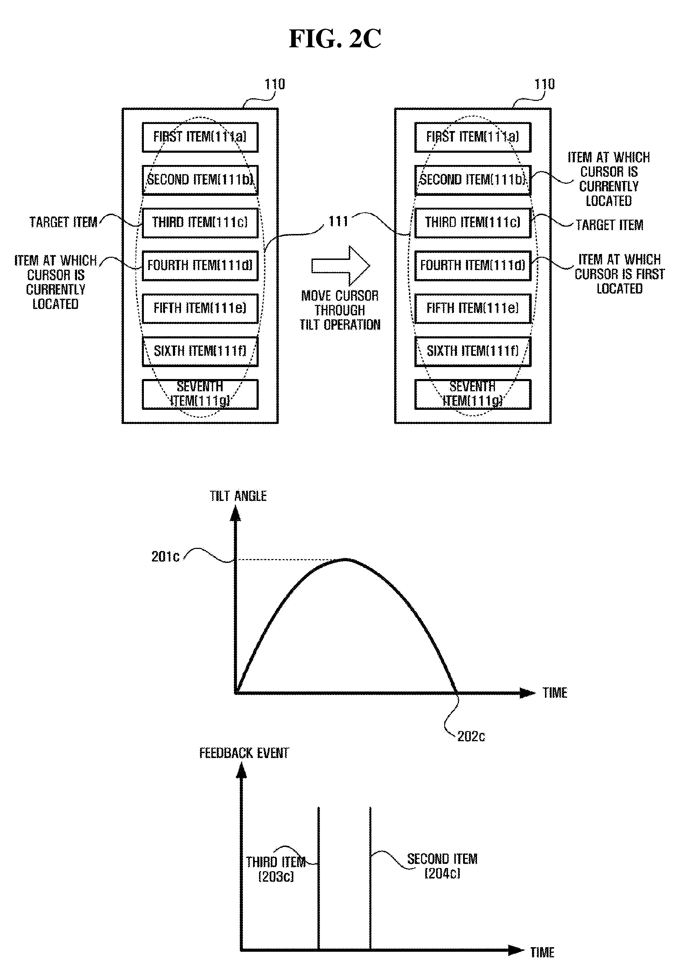

FIG. 2C shows a case where since a tilt 201c having a predetermined magnitude is appropriately given but a tilt time 202c is extremely long, the cursor passes the third item 111c as the target item and instead is located at the second item 111b, and feedback events 203c and 204c for the third item 111c and the second item 111b are generated.

From the three cases having been described with reference to FIGS. 2A to 2C, it can be understood that it is important that a tilt having a predetermined magnitude be given for a predetermined amount of time in order to accurately move the cursor to the target item.

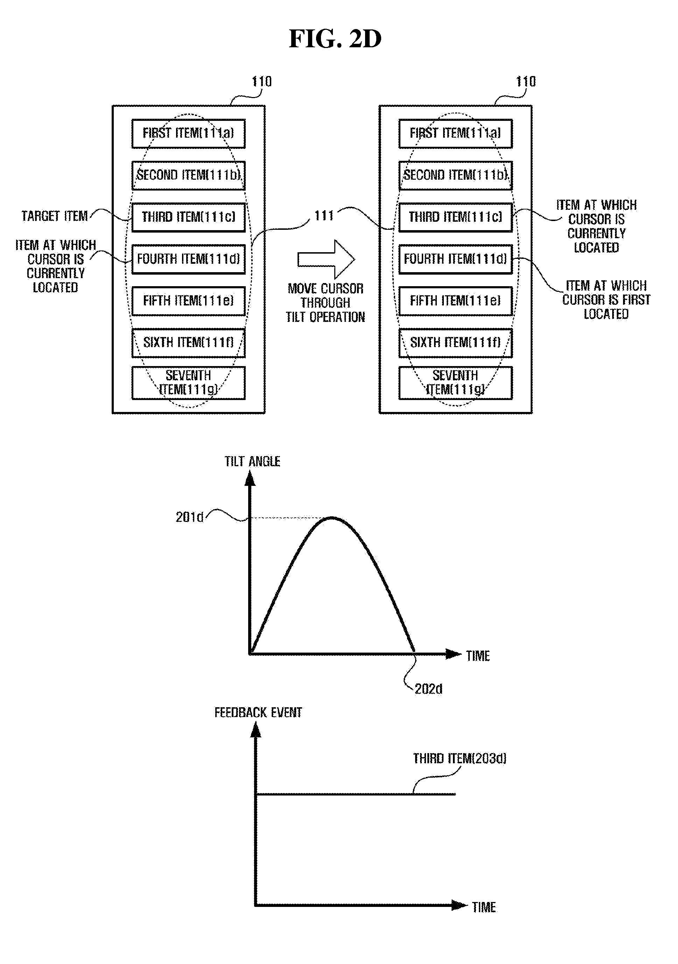

Accordingly, as shown in FIG. 2D, a feedback event 203d is continuously provided and the user inputs a predetermined tilt 201d to a portable apparatus for a predetermined amount of time 202d, thereby enabling the cursor to be located at a target item of a list.

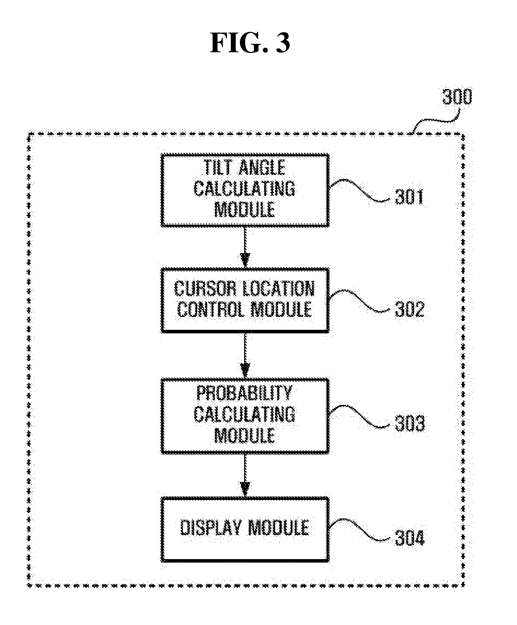

FIG. 3 is a diagram illustrating a structure of an apparatus for providing feedback of a location of a cursor in a tilt-based list search according to an embodiment of the present invention.

An apparatus 300 for providing feedback of a location of a cursor in a tilt-based list search includes a tilt angle calculating module 301 that calculates a tilt angle, a cursor location control module 302 that calculates and changes a location of a cursor according to a tilt angle, a probability calculating module 303 that calculates probabilities of the cursor being located at items of each list according to the calculated location of the cursor, and a display module 304 that changes an attribute of the list according to the calculated probabilities and displays it.

Meanwhile, the term "unit" used in the present embodiments, that is, "module" or "table" means software, or a hardware component such as an FPGA (Field Programmable Gate Array) or an ASIC (Application Specific Integrated Circuit) and the modules each perform assigned functions.

However, the modules are not limited to software or hardware. The modules may be configured in an addressable storage medium, or may be configured to run on at least one processor.

Therefore, as an example, the modules include components such as software components, object-oriented software components, class components, and task components; processors, functions, attributes, procedures, sub-routines, segments of program codes, drivers, firmware, microcodes, circuits, data, databases, data structures, tables, arrays, and variables.

The functions provided by the components and the modules may be combined into fewer components and/or modules may be separated into additional components and modules.

In the apparatus 300 shown in FIG. 3, the tilt angle calculating module 301 calculates a current tilt angle of a portable angle.

The tilt angle calculating module 301 may include a three-axis acceleration sensor module. This tilt angle calculating module 301 may calculate a ratio between gravity components measured by a three-axis acceleration sensor, calculate a pitch angle in an upward-to-downward direction and a roll angle in a leftward-to-rightward direction, and calculate a current tilt angle of a portable apparatus.

If acceleration values detected at X, Y, and Z axes are defined as Ax, Ay, and Az, the calculated pitch angle and roll angle are represented by Equation 1.

Equation 1

$$Roll \square \tan^{\square l} \left[ \frac{A_x}{A_y} \right]$$

$$Pitch \square \tan^{\square l} \left[ \frac{A_z}{\sqrt{A_y^2 \square A_x^2}} \right]$$

The cursor location control module 302 calculates and changes the location of the cursor according to the tilt angle calculated by the tilt angle calculating module 301.

That is, the cursor location control module 302 updates an internal cursor location parameter according to the tilt angle calculated by the tilt angle calculating module 301 and a tilt direction.

A tilt angle of a portable apparatus by a user at the time t is defined as $\square$(t), a location of a cursor at the time t is defined as x(t), the time after the predetermined amount of time passes from the time t is defined as t + 1, and a location of the cursor at the time t + 1 is defined as x(t + 1). In this case, when the location of the cursor is changed in proportion to $\square$(t), x(t + 1) is represented by Equation 2 as a linear sum between a previous location, that is, the location x(t) of the cursor at the time t and a variation in location due to the tilt angle.

Equation 2

$$x(t \square 1) \square x(t) \square \square \square(t)$$

In this case, $\square$ is a constant that indicates the variation of the cursor location according to the variation of the tilt angle, and may be determined as a value which may be experimentally used by the general public.

The probability calculating module 303 calculates the probabilities of the cursor being located at items of each list according to the location of the cursor calculated by the cursor location control module 302.

That is, the probability of the cursor located for each item is calculated according to the location parameter x (t + 1) of the cursor at the time t + 1 after a predetermined amount of time passes from the time t.

At this time, the items in the list may be represented by positive numbers of 1, 2, 3, ... in order in which the items are located.

First, if the location of the cursor at the time t is x (t) = 3.3, it means that the cursor is located between the third item and the fourth item. That is, the cursor may be located at the third item and the cursor may be located at the fourth item.

For reference, the cursor may be accurately located at the item represented by the positive number as described above, or located between items, and thus the locations of the cursor have predetermined continuous values. In the embodiment of the present invention, the location of the cursor is represented by a continuous real number value, but the present invention is not limited thereto.

As described above, a portion is required for calculating the probability of the cursor being located at each item according to the location of the cursor. According to this embodiment, the probability calculating module 303 provides a linear probability transform method.

An X axis indicates a location of a cursor according to each item in a list and a Y axis indicates the probability of the cursor being located at each item.

In this case, a value of the probability of the cursor being located at each item in a list is defined as a "cursor location probability value". At this time, when the cursor is accurately located at a specific item, a cursor location probability value in the corresponding item becomes 1.0 and a cursor location probability in the other items becomes 0.

That is, the cursor location probability value becomes approximately 1.0 when the distance between the cursor and each item of a list where the cursor is located is decreased, and approximately 0 when the distance between the cursor and each item of the list where the cursor is located is increased.

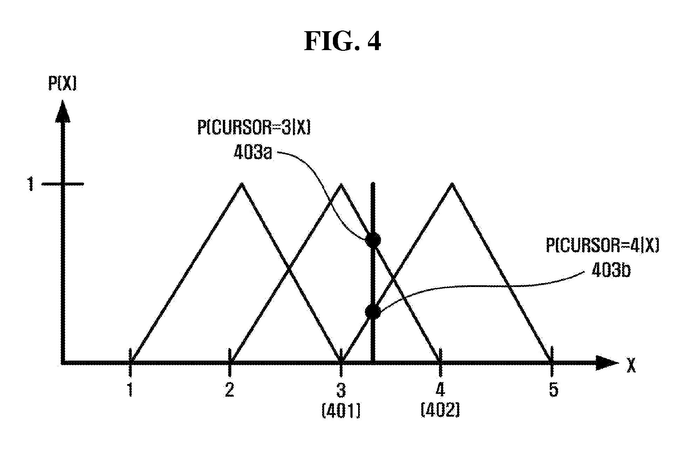

As shown in FIG. 4, when the cursor is located between the third item 401 and the fourth item 402, a method of calculating the probability P (cursor = 3/x) that the cursor is closer to the third item 401 and a method of calculating the probability P (cursor = 4/x) that the cursor is closer to the fourth item 402 are displayed by two dots 403a and 403b, respectively.

On the basis of a cursor location probability value for each item in a list calculated by the above-described probability calculating module 303, the display module 304 changes an attribute of each item and displays it to a user.

At this time, the attribute of each item includes at least one of a color, an area, a shape, a sound, and a vibration, and may include other attributes that are not described in the embodiment of the present invention.

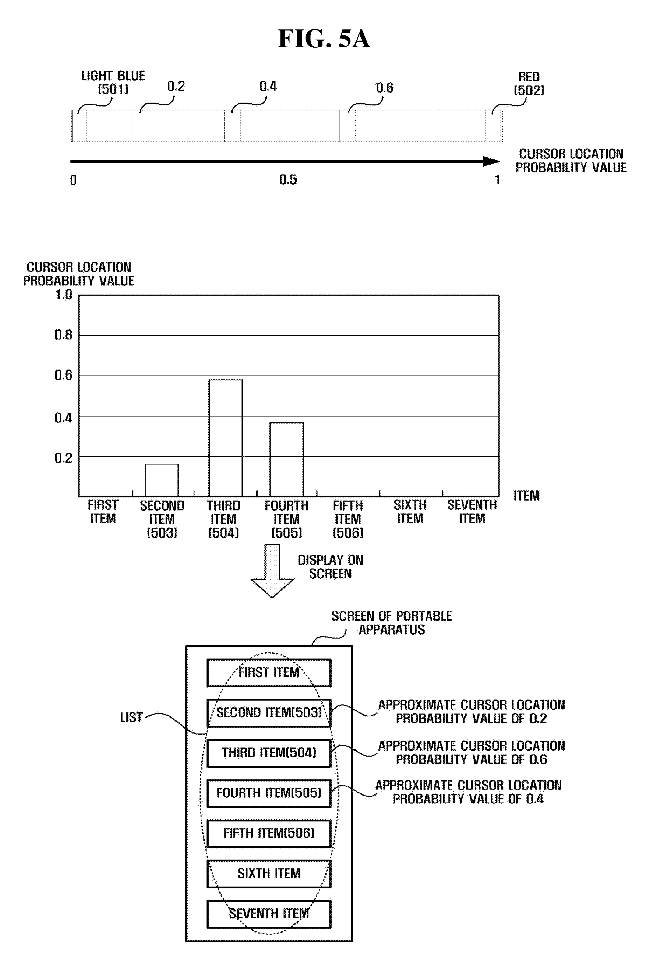

FIGS. 5A to 5C are diagrams visually illustrating the cursor location probability for each item according to an embodiment of the present invention.

For example, as shown in FIG. 5A, probability values in a range of 0 to 1 correspond to colors, and a light blue 501 may be given when the probability value becomes approximately 0 and a red 502 may be given when the probability value becomes approximately 1. The colors that correspond to the probability values are not limited to the embodiment of the present invention, and various changes and modification can be made in different embodiments.

As shown in FIG. 4, if it is assumed that the cursor is located between the fourth item 505 and the third item 504 in a state where the cursor is closer to the third item 5 rather than the fourth item 505, the cursor location probability for each item is different, as shown in FIG. 5A.

That is, the cursor is located closer to the third item 504 rather than the fourth item 505 when the cursor is located between the fourth item 505 and the third item 504. For this reason, referring to a graph, a cursor location probability value is largest in the third item 504, and is large in order of the fourth item 505 and the second item 503.

In accordance with the above-described cursor location probability values, the display module 304 displays a color corresponding to a cursor location probability value for each of the items 503 to 505 on the screen, which is shown in FIG. 5A.

For reference, the fifth item 506 has a cursor location probability value that is similar to that of the second item 503. In addition, although cursor location probability values exist in the other items, the cursor location probability values are very small, and will be omitted, for convenience of an explanation.

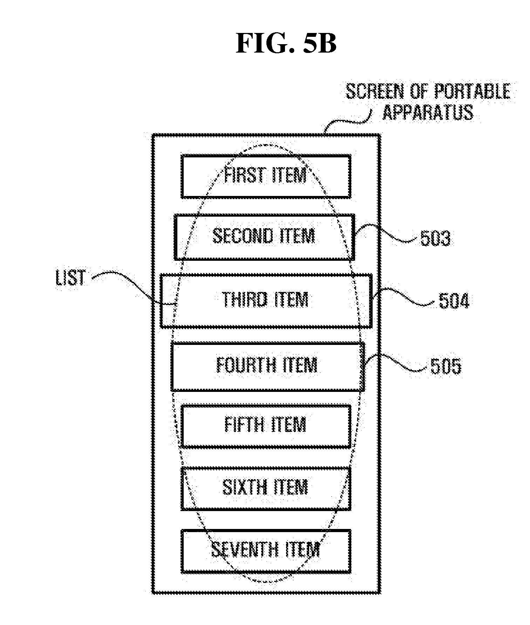

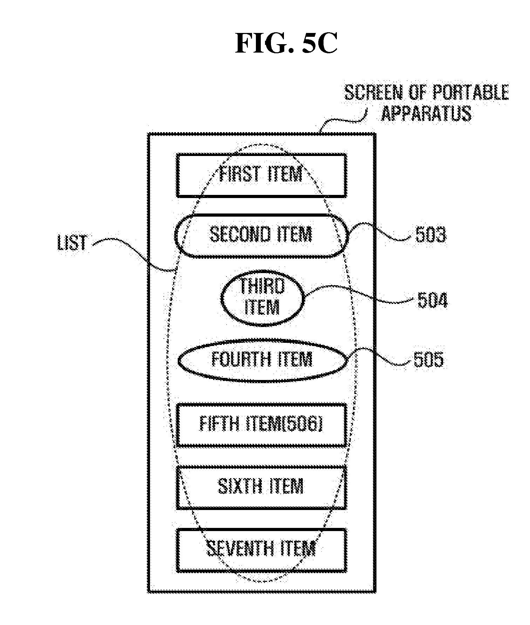

Further, the cursor location probability value can correspond to an area and a shape of each item as well as a color, which is shown in FIGS. 5B and 5C.

For example, when the cursor location probability value is increased, an area of each item in a list is expanded, and when the cursor location probability value is decreased, the area thereof is contracted.

From FIG. 5, it can be understood that an area of an item is expanded in order of the location probability values starting from the largest location probability value, that is, the third item 504, the fourth item 505, and the second item 503. Of course, if the cursor is accurately located at a specific item, a cursor location probability value of the corresponding item becomes 1.0, and thus an area of the corresponding item is expanded. Since the cursor location probability values of the other items become 0, areas of the items are not changed.

Further, when a cursor location probability value is decreased, an area of an item can be contracted.

If an area of an item that is first displayed on the screen of the portable apparatus is defined as a cursor location probability value 1.0, the area of the corresponding item is contracted when the cursor location probability value is decreased.

At this time, an area of each item that corresponds to a cursor location probability value is not limited to the embodiment of the present invention, but not only the area of each item but also the shape thereof can be changed so as to correspond to a cursor location probability value.

For example, if it is assumed that a shape of an item is circular on the basis of a cursor location probability value of 1.0, a shape of the corresponding item is changed from a circular shape to a rectangular shape, when the cursor location probability value is increased, as shown in FIG. 5C.

It can be understood that as the cursor location probability value is increased, the shape of the item is changed from the circular shape to the rectangular shape in which corners are rounded. Specifically, the shape of the third item having the largest cursor location probability value is approximately in the circular shape, the shape of the fourth item 505 having the middle cursor location probability value is approximately in the elliptical shape, and the shape of the second item 503 having the smallest cursor location probability value is approximately in the rounded shape.

The change in shape of the item is not limited to the embodiment of the present invention, but various changes can be made in different embodiments.

Further, a cursor location probability displaying method is not limited to a visual method, but a sound or a tactile sensor may be used when displaying the cursor location probability.

For example, in the case of sound, when the cursor location probability value is large, a large volume of sound is generated, and when the cursor location probability value is small, a small volume of sound is generated. In the case of tactile sense, the cursor location probability value is large, a strong vibration is generated, and when the cursor location probability value is small, a weak vibration is generated.

Further, in order to display a type of an item where the cursor is located, when a sound or a vibration of a tactile sensor is generated, a frequency may be changed. Specifically, when the cursor is located at an upper side, a high frequency may be output, and when the cursor is located at a lower side, a low frequency may be output.

By using the list display method, a reaction of a tilt-based menu list can be fed back to a user, it is possible to prevent overshooting from occurring when a menu moves.

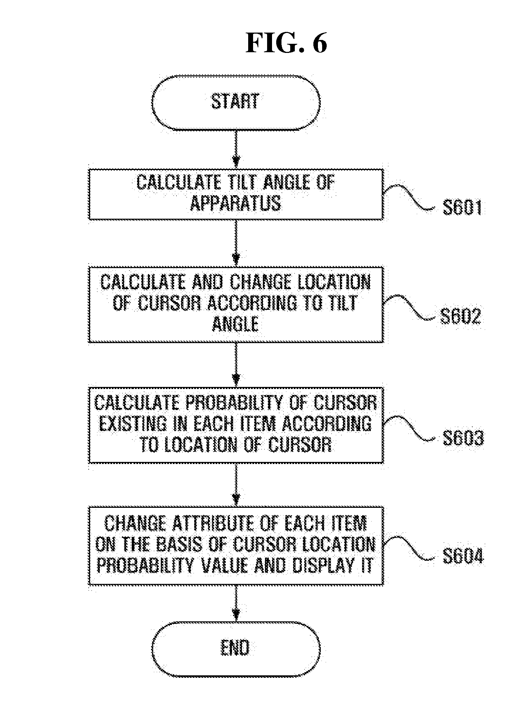

FIG. 6 is a flowchart illustrating a method of providing feedback of a location of a cursor in a tilt-based list search according to an embodiment of the present invention.

The tilt angle calculating module 301 calculates a current tilt angle of a portable apparatus by a tilt operation of a user (Step S601).

After Step S601, the cursor location control module 302 calculates and changes the location of the cursor according to a tilt angle calculated by the tilt angle calculating module 301 (Step S602).

For reference, the items in the list may be represented by positive numbers of 1, 2, 3, ... according to orders in which the items are located. When the location of each item is represented by a positive number, the cursor may be accurately located at the item represented by the positive number as described above, or located between items, and thus the location of the cursor has predetermined continuous values. In the embodiment of the present invention, the location of the cursor is represented by a continuous real number value, but the present invention is not limited thereto.

After Step S602, the probability calculating module 303 calculates the probabilities of the cursor being located at items of each list according to the location of the cursor calculated by the cursor location control module 302 (Step S603).

At this time, when the cursor is accurately located at a specific item, the cursor location probability value in the corresponding item becomes 1.0, and the cursor location probability value in the other items becomes 0.

That is, the cursor location probability value is approximately 1.0 when the distance between the cursor and each item of a list where the cursor is located is decreased, and is approximately 0 when the distance between the cursor and each item of the list where the cursor is located is increased.

After Step S603, on the basis of a cursor location probability value for each item in a list calculated by the above-described probability calculating module 303, the display module 304 changes an attribute of each item and displays it to a user (Step S604).

At this time, the attribute of each item includes at least one of a color, an area, a shape, a sound, and a vibration, and may include other attributes that are not described in the embodiment of the present invention.

For example, as shown in FIG. 5A, probability values in a range of 0 to 1 correspond to colors, and a light blue 501 may be given when the probability value is approximately 0 and a red 502 may be given when the probability value is approximately 1. As shown in FIG. 5B, an attribute of an item corresponding to a cursor location probability value can be changed such that when the cursor location probability value is large, an area of the item in the list is expanded, and when the cursor location probability value is small, the area thereof is contracted, as shown in FIG. 5B.

Further, as shown in FIG. 5C, a shape of an item can be changed according to the cursor location probability value as well as the area. The cursor location probability displaying method is not limited to a visual method using a color, an area, and a shape, but a sound or a tactile sensor may be used when displaying the cursor location probability.

For example, in the case of sound, when the cursor location probability value is large, a large volume of sound is generated, and when the cursor location probability value is small, a small volume of sound is generated. In the case of tactile sense, the cursor location probability value is large, a strong vibration is generated, and when the cursor location probability value is small, a weak vibration is generated.

Although the present invention has been described in connection with the exemplary embodiments of the present invention, it will be apparent to those skilled in the art that various modifications and changes may be made thereto without departing from the scope and spirit of the present invention. Therefore, it should be understood that the above embodiments are not limitative, but illustrative in all aspects.

According to the apparatus and method of providing feedback of a location of a cursor in a tilt-based list search, the following effects can be achieved.

The probability of the cursor being located at each item of a list by a tilt operation of a user is calculated, and the movement of the cursor is fed back in real time according to the probability, which prevents overshooting from occurring.

Further, the overshooting can be prevented, which enables the user to locate the cursor at a target item.

Furthermore, the probability of the cursor being located at each item of a list by a tilt operation of a user is calculated, and the movement of the cursor is feedback in real time according to the probability, which reduces the time needed when the user learns a tilt-based list movement method.

## Claims

1. An apparatus for providing feedback of a location of a cursor in a tilt-based list search, the apparatus comprising:

    a cursor location control module calculating and changing the location of the cursor according to a tilt angle;
    a probability calculating module calculating probabilities of the cursor being located at items of each list according to the calculated location of the cursor; and

a display module changing an attribute of the list according to the calculated probabilities and displaying the list.

2. The apparatus of claim 1, further comprising:

   a tilt angle calculating module calculating the tilt angle.

3. The apparatus of claim 1, wherein the cursor location control module changes the location of the cursor according to a tilt angle and a tilt direction of a portable apparatus.

4. The apparatus of claim 1, wherein the locations of the cursor have predetermined continuous values.

5. The apparatus of claim 1, wherein the probability has a large value when the distance between the cursor and each item is short.

6. The apparatus of claim 1, wherein the attribute of the list includes at least one of a color, an area, a shape, a sound, and a vibration.

7. A method of providing feedback of a location of a cursor in a tilt-based list search, the method comprising:

   calculating and changing the location of the cursor according to a tilt angle;
   calculating probabilities of the cursor being located at items of each list according to the calculated location of the cursor; and
   changing an attribute of the list according to the calculated probability and displaying the list.

8. The method of claim 7, further comprising:

   calculating the tilt angle.

9. The method of claim 7, wherein, in the calculating and changing of the location of the cursor according to the tilt angle, the location of the cursor is changed according to a tilt angle and a tilt direction of a portable apparatus.

10. The method of claim 7, wherein the locations of the cursor have predetermined continuous values.

11. The method of claim 7, wherein the probability has a large value when the distance between the cursor and each item is short.

12. The method of claim 7, wherein the attribute of the list includes at least one of a color, an area, a shape, a sound, and a vibration.

# FIG. 1

# FIG. 2A

# FIG. 2B

110

| FIRST ITEM(111a) |
| SECOND ITEM(111b) |
| THIRD ITEM(111c) |
| FOURTH ITEM(111d) |
| FIFTH ITEM(111e) |
| SIXTH ITEM(111f) |
| SEVENTH ITEM(111g) |

TARGET ITEM

ITEM AT WHICH CURSOR IS CURRENTLY LOCATED

111

MOVE CURSOR THROUGH TILT OPERATION

110

| FIRST ITEM(111a) |
| SECOND ITEM(111b) |
| THIRD ITEM(111c) |
| FOURTH ITEM(111d) |
| FIFTH ITEM(111e) |
| SIXTH ITEM(111f) |
| SEVENTH ITEM(111g) |

TARGET ITEM

ITEM AT WHICH CURSOR IS CURRENTLY LOCATED

TILT ANGLE

201b

202b

TIME

FEEDBACK EVENT

TIME

11

# FIG. 2C

110

FIRST ITEM(111a)

SECOND ITEM(111b)

TARGET ITEM — THIRD ITEM(111c)

ITEM AT WHICH CURSOR IS CURRENTLY LOCATED — FOURTH ITEM(111d)

FIFTH ITEM(111e)

SIXTH ITEM(111f)

SEVENTH ITEM(111g)

111

MOVE CURSOR THROUGH TILT OPERATION

110

FIRST ITEM(111a)

SECOND ITEM(111b) — ITEM AT WHICH CURSOR IS CURRENTLY LOCATED

THIRD ITEM(111c) — TARGET ITEM

FOURTH ITEM(111d) — ITEM AT WHICH CURSOR IS FIRST LOCATED

FIFTH ITEM(111e)

SIXTH ITEM(111f)

SEVENTH ITEM(111g)

TILT ANGLE

201c

TIME

202c

FEEDBACK EVENT

THIRD ITEM (203c)

SECOND ITEM (204c)

TIME

# FIG. 2D

110
110

FIRST ITEM(111a)

SECOND ITEM(111b)

TARGET ITEM — THIRD ITEM(111c)

ITEM AT WHICH CURSOR IS CURRENTLY LOCATED — FOURTH ITEM(111d)

FIFTH ITEM(111e)

SIXTH ITEM(111f)

SEVENTH ITEM(111g)

111

MOVE CURSOR THROUGH TILT OPERATION

FIRST ITEM(111a)

SECOND ITEM(111b)

THIRD ITEM(111c) — ITEM AT WHICH CURSOR IS CURRENTLY LOCATED

FOURTH ITEM(111d) — ITEM AT WHICH CURSOR IS FIRST LOCATED

FIFTH ITEM(111e)

SIXTH ITEM(111f)

SEVENTH ITEM(111g)

TILT ANGLE

201d

TIME

202d

FEEDBACK EVENT

THIRD ITEM(203d)

TIME

# FIG. 3

```
                                        300
  ┌ ─ ─ ─ ─ ─ ─ ─ ─ ─ ─ ─ ─ ─ ─ ─ ─ ┐
  |        ┌──────────────┐          |
  |        │  TILT ANGLE  │          |
  |        │  CALCULATING │── 301    |
  |        │    MODULE    │          |
  |        └──────────────┘          |
  |               │                  |
  |               ▼                  |
  |        ┌──────────────┐          |
  |        │ CURSOR LOCATION│── 302  |
  |        │ CONTROL MODULE │        |
  |        └──────────────┘          |
  |               │                  |
  |               ▼                  |
  |        ┌──────────────┐          |
  |        │  PROBABILITY │          |
  |        │  CALCULATING │── 303    |
  |        │    MODULE    │          |
  |        └──────────────┘          |
  |               │                  |
  |               ▼                  |
  |        ┌──────────────┐          |
  |        │DISPLAY MODULE│── 304    |
  |        └──────────────┘          |
  └ ─ ─ ─ ─ ─ ─ ─ ─ ─ ─ ─ ─ ─ ─ ─ ─ ┘
```

# FIG. 4

# FIG. 5A

LIGHT BLUE
(501)     0.2          0.4          0.6          RED
(502)

CURSOR LOCATION
PROBABILITY VALUE

0          0.5          1

CURSOR LOCATION
PROBABILITY VALUE

| | |
|---|---|
| 1.0 | |
| 0.8 | |
| 0.6 | |
| 0.4 | |
| 0.2 | |

FIRST   SECOND   THIRD   FOURTH   FIFTH   SIXTH   SEVENTH   ITEM
ITEM    ITEM     ITEM    ITEM     ITEM    ITEM    ITEM
        (503)    (504)   (505)    (506)

DISPLAY ON
SCREEN

SCREEN OF PORTABLE
APPARATUS

FIRST ITEM

LIST

SECOND ITEM(503) — APPROXIMATE CURSOR LOCATION
PROBABILITY VALUE OF 0.2

THIRD ITEM(504) — APPROXIMATE CURSOR LOCATION
PROBABILITY VALUE OF 0.6

FOURTH ITEM(505) — APPROXIMATE CURSOR LOCATION
PROBABILITY VALUE OF 0.4

FIFTH ITEM(506)

SIXTH ITEM

SEVENTH ITEM

# FIG. 5B

SCREEN OF PORTABLE
APPARATUS

FIRST ITEM

SECOND ITEM ——— 503

LIST

THIRD ITEM ——— 504

FOURTH ITEM ——— 505

FIFTH ITEM

SIXTH ITEM

SEVENTH ITEM

EP 1 942 404 A2

# FIG. 5C

SCREEN OF PORTABLE
APPARATUS

FIRST ITEM

SECOND ITEM — 503

THIRD ITEM — 504

FOURTH ITEM — 505

FIFTH ITEM(506)

SIXTH ITEM

SEVENTH ITEM

LIST

# FIG. 6

START

↓

CALCULATE TILT ANGLE OF APPARATUS — S601

↓

CALCULATE AND CHANGE LOCATION OF CURSOR ACCORDING TO TILT ANGLE — S602

↓

CALCULATE PROBABILITY OF CURSOR EXISTING IN EACH ITEM ACCORDING TO LOCATION OF CURSOR — S603

↓

CHANGE ATTRIBUTE OF EACH ITEM ON THE BASIS OF CURSOR LOCATION PROBABILITY VALUE AND DISPLAY IT — S604

↓

END

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020070001599
- KR 2004092217